Europäisches Patentamt

(19) European Patent Office

Office européen des brevets

(11) Publication number: **0 123 733**
**B1**

(12) **EUROPEAN PATENT SPECIFICATION**

(45) Date of publication of patent specification: **04.06.86**

(51) Int. Cl.⁴: **B 29 C 35/02**

(21) Application number: **83113162.8**

(22) Date of filing: **28.12.83**

(54) **Device for vulcanizing tyres.**

(30) Priority: **12.01.83 IT 1906783**

(43) Date of publication of application:
**07.11.84 Bulletin 84/45**

(45) Publication of the grant of the patent:
**04.06.86 Bulletin 86/23**

(84) Designated Contracting States:
**AT BE DE FR GB LU NL SE**

(56) References cited:
**AT-B- 357 422**
**US-A-3 833 323**
**US-A-3 910 735**

(73) Proprietor: **SOCIETA PNEUMATICI PIRELLI S.p.A.**
**Piazzale Cadorna, 5**
**I-20123 Milan (IT)**

(72) Inventor: **Salvadori, Bruno**
**Via Fermi 7**
**Cormano (Milan) (IT)**

(74) Representative: **Mariani, Giorgio, Dr. et al**
**INDUSTRIE PIRELLI S.p.A. Direzione Brevetti**
**Piazzale Cadorna, 5**
**I-20123 Milano (IT)**

Courier Press, Leamington Spa, England.

## Description

The present invention concerns the devices used for moulding and for vulcanizing elastomeric material articles — and especially, the presses used for vulcanizing vehicle-wheel tyres. Such a device is disclosed in US—A—3 910 735 which has all of the precharacterising features of claim 1.

Once any whatsoever elastomeric material article is realized in its definite structure, it has to undergo a vulcanizing process — i.e. a thermic treatment, of a high temperature and of a set duration, by means of which the elastomeric material loses its characteristics of plasticity, and becomes transformed into an elastic material, provided with determined characteristics of mechanical resistence.

In the particular instance of vehicle-wheel tyres, the latter are enclosed inside a mould, then heated — through means known to technicians — which thereupon, provides for the vulcanizing and the moulding of the outer and inner surfaces of the tyre.

Therefore, one problem of the vulcanization results as being that of bringing the surfaces of the mould, which have to come into contact with the outer surface of the tyre, to an adequate temperature and maintaining these surfaces at the said temperature during the various working phases of the device — i.e. even during the opening cycles that are necessary for removing the vulcanized tyre from the mould, and for reloading a new, raw carcass into the mould for being vulcanized.

Amongst the already known vulcanizing moulds, there are the so-called centripetal-type moulds — that are necessary for vulcanizing radial tyres. It is known that, in the crown zone, these tyres are provided with an annular, reinforcing-structure that is circumferentially inextensible, and which hence, does not allow any expansion of the carcass when it is inside the vulcanizing mould.

Therefore, for obtaining the moulding of the tyre and in particular, of the tread pattern of the crown tread portion, it is necessary for the corresponding surface of the mould itself, to penetrate into the thickness of the tread-band: this is obtained by realizing the mould surface, that corresponds to the outer perimetric surface of the tyre, through a plurality of sectors that shift radially, in both senses. In such a way the mould allows for the tyre to be inserted inside it, while said sectors are in this radially expanded state, then the moulding of the tread-band, through the radial, centripetal shifting of the sectors, and finally, the removal of the tyre from the mould, through the further radial enlargement of the sectors.

Therefore, it is clear that the problem of heating the surfaces in contact with the tyre that is to be vulcanized, cannot be easily solved as far as regards the above-mentioned sectors — precisely owing to the fact that these sectors have to be shiftable with respect to the mould axis and reciprocally to each other.

Diverse attempts have been made for solving this problem. One of the first methods used consists in enclosing the mould inside a further container — into which a high temperature vapour is introduced. The vapour evidently yields up its heat to the diverse parts of the mould which hence, reach the necessary temperature for the vulcanizing process. Among other considerations this system presents a serious drawback consisting of the fact that every time that this container is opened — for allowing the mould to be opened and the vulcanized tyre to be removed, all the vapour put into it must be previously discharged from the container and the residual part of the vapour, that still remains in the container, is also dispersed into the surrounding ambient, whilst said parts which constitute the mould will undergo cooling.

Therefore, when the container is once again reclosed, and another raw tyre is introduced inside the mould, a new quantity of vapour will have to be provided, and the parts of the mould — which in the meantime have cooled, will have to be once again brought back to the temperature required. This causes a sensible lengthening of the vulcanizing cycle time, and a considerable dispersion of heat.

For preventing this loss of precious energy, it is also foreseen to cause the vapour to circulate inside the opportune cavity made for it in the supporting-structure of the diverse mould parts — and in particular, in the containing-ring that guides the movement of the sectors. The drawback to be found in said system, consists in a lowering of the temperature — which is verified between the containing-ring and the surface of the sector in contact with the tyre, that hence, requires the ring to be taken to a decidedly higher temperature than what is specified for the vulcanizing process.

According to US—A—3 833 323 in trying to improve this procedure, it was thought to cause the heating vapour to circulate inside the opportune cavity made directly in the sectors. However, with this system there is verified a discharging of vapour towards the outside ambient each time that the mould is opened and the sectors shift circumferentially, reciprocally to one another. Hence, the very same drawbacks that are found in the device with the container previously described, are also faced here.

The Applicant has now invented a way for obtaining the direct heating of the sectors by means of circulating vapour inside said sectors — without this bringing about any vapour losses towards the outside ambient during the moving phases of the mould.

Therefore what constitutes the object of the present patent, is a device for moulding and vulcanizing elastomeric-material articles — specifically vehicle-tyres, comprising two continuous, coaxial annular sections, axially and reciprocally shiftable, corresponding to the tyre sidewalls, and a plurality of sectors, corresponding to the outer perimetrical zone of the tyre, interposed between said annular sections, and concentrically disposed with respect to the latter, connected to the radially innermost surface of a containing-ring, coaxial with said annular sections and axially shiftable with respect to the same, said sectors being radially shiftable in both senses with respect to the common axis of said sections, and axially shiftable with respect to at least one of them, each sector being provided with a matrix on its radially innermost surface, that is apt for moulding, on said perimetrical outer zone of the tyre, a corresponding portion of the tread pattern, and with it being provided, on its radially external surface, with surfaces that are inclined with respect to the axis of said ring and coupled with corresponding portions of the radially inner surface of said ring, with having a reciprocal sliding possibility — for the realizing of said radial shiftings of the sectors, said device being characterized by the fact that said sectors are provided with cavities — which constitute a part of a circuit that is permanently closed towards the outside ambient, apt for allowing the circulation of a fluid for directly heating the said sectors.

According to a convenient form of actuation for the device in question, the above-said cavities comprise a network of channels presenting points of entry from outside the sector, for the inlet and outlet of said fluid. Moreover, said network of channels is conveniently constituted by a plurality of axial blind-channels, each having its axis parallel to the axis of the device, and all being connected to one another through a plurality of transversal blind-channels, with each transversal channel connecting at least two axial channels, said network of channels being connected with the radially outer surface of the sector through two substantially radial channels — respectively below and above, connected to at least one of said axial channels, the radial lower channel being disposed in correspondence of the axially lower extremity of said axial channel, said transversal and radial channels having their own axes inclined, with respect to the axes of the axial channels, at an angle that is diverse to 90°.

Quite conveniently, the said angle-of-inclination, of said transversal and radial channels, is comprised between 85° and 89°; whereas all the sectors are connected — preferably in series one to the other, through a ring-shaped circuit; each upper radial channel being connected with the radial lower channel of the adjacent sector — with the exception of one radial upper channel, connected with means for inletting said fluid, and of its corresponding radial lower channel, connected with means for drawing and/or discharging said fluid.

According to a further advantageous form of realization, the above-said network of channels is connected, in a fluid-tight manner, with a further similar system of channels made in said matrix.

Quite conveniently, the said sectors are separated from the adjacent parts of the mould, through surfaces of a thermally insulating material. Should the said thermically insulating material possess antifrictional characteristics as well, it could conveniently constitute at least the covering of said inclined surfaces — and hence, also of the axially upper and lower surfaces of said sectors, slidable against the corresponding surfaces of the adjacent parts of the device.

To end with, it is convenient for the heating fluid of the above-said device to be a vapour.

In any case, the present invention will be better comprehended with the aid of the following description and the attached FIGURES, that are given solely by way of non-limiting example, and whereby:

FIG. 1 illustrates a device according to the invention, in its open position;

FIG. 2 illustrates the device of FIG. 1, in its closed position — with an unvulcanized raw-tyre inserted into the mould;

FIG. 3 illustrates a diverse form of realization for the sectors of the device according to the invention;

FIG. 4 illustrates an axial straight section of one of the sectors of the device according to the invention;

FIG. 5 illustrates a lateral section of a device according to FIG. 4;

FIG. 6 illustrates a side-view of the sectors of the device according to the invention.

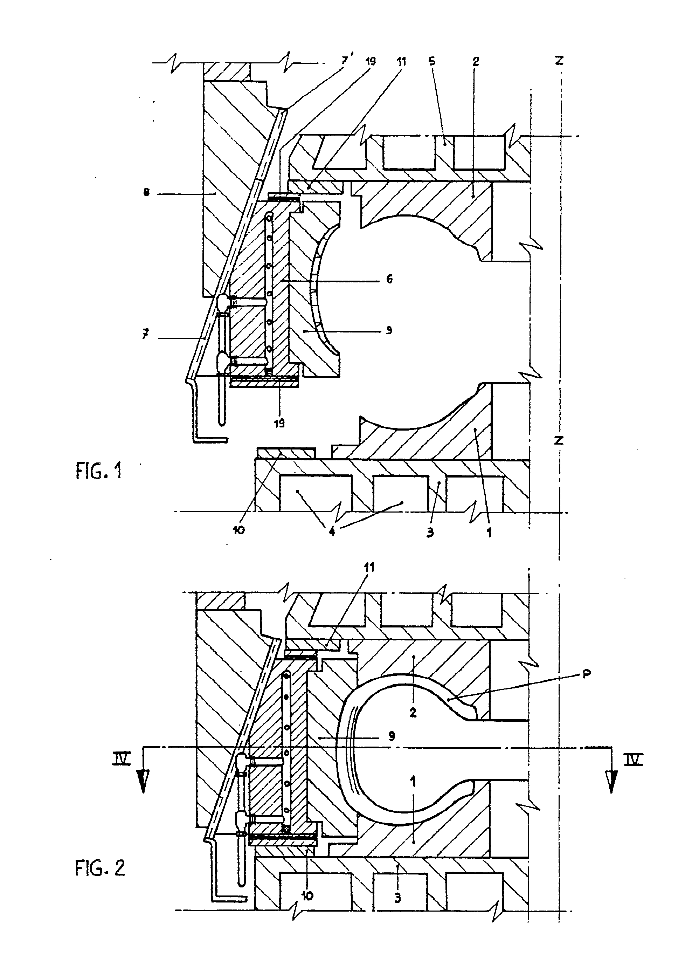

With reference to FIG. 1, there is illustrated a device, for moulding and vulcanizing tyres, provided with a centripetal-type mould in its open position. The said mould consists of two, continuous annular-sections 1 and 2, co-axial with each other according to the axis z—z, that shall hereon be referred to as the 'flanks', and which correspond to the tyre sidewalls.

The lower flank 1, is fixed to a plate 3 that, in its turn, is fixed to the base of the device. Said plate is provided with the cavities 4, inside which there is made to circulate a heating-fluid — that, quite conveniently, can be a vapour — which maintains the flank 1 at the temperature foreseen, both, during the tyre-vulcanizing phase, as well as during the phase of opening the mould.

The upper flank 2, is fixed to a plate 5 that, in its turn, is fixed to a part of the device which is not shown (since it does not concern the purpose of the present invention), which allows for the axial shifting of the flank 2 along the axis z—z and in respect of the lower flank 1. Even the plate 5 is provided with opportune cavities for the circulation of the heating-fluid, in a similar way to that foreseen for the plate 3. Interposed in-between the flanks 1 and 2, is a plurality of sectors 6 — disposed concentrically in a ring and co-axial to the axis z—z, that are radially shiftable, in both the senses, with respect to said axis.

The above-said sectors are fixed, by means of opportune guides 7 disposed on their radially outer surfaces, to a containing-ring 8 — also co-axial with the axis z—z, that is provided, on its radially inner surface, with corresponding guides 7'. Said ring, with its axial movement, commands the radial and axial shiftings of the said sectors, in both the senses. The axial movement of said ring takes place either simultaneously to the axial movement of the plate 5, or else independently of the same — as shall be better defined further on in this text. Each sector is provided — on its radially inner surface, with a matrix 9 that, in its turn, is provided — on its radially inner surface, with a series of reliefs and blades apt for penetrating into the thickness of the tyre tread-band, and for moulding on said tread-band the corresponding portion of the tread pattern. In the body of each sector 6, there is made a plurality of channels which shall be described later on in detail.

By comparing the FIGS. 1 and 2, it can easily be comprehended how the device functions. If we suppose that a raw-tyre carcass "P" has been introduced into the mould so as to rest upon the lower flank 1, at this point the ring 8 and the plate 5 will simultaneously be shifted towards the plate 3.

When the axially lower surface of the sector 6 comes into contact with a corresponding sliding-surface 10, made fast with the plate 3, the axial movement of the sector stops — and hence, also the axial movement stops of the upper flank 2 and of the supporting plate 5 that results as being permanently in contact with the axial outer surface of the sectors 6 by means of the interpositioning of opportune sliding surfaces 11. In this position moreover, the two flanks come into contact with the tyre sidewalls, and they exactly circumscribe the cavity inside which said tyre will be moulded and vulcanized, with defining besides, what the moulding profile of the tyre sidewalls will be.

Simultaneously however, the ring 8 follow its axial movement towards the base of the device. As a result of this movement and of the reciprocal coupling between ring 8 and sectors 6 — according to the inclined planes defined by the pairs of sliding-guides, the sectors are forced to shift radially, in a centripetal manner, towards the axis z—z, till they take the matrix 9 into contact with the corresponding surfaces of the flanks 1 and 2. During this movement, the reliefs disposed on the radially inner surfaces of the matrix, penetrate into the thickness of the tyre tread-band, which is maintained fixed with respect to its equatorial-plane — due both, to the presence of the flanks 1 and 2, as well as to the pressure exercised by a suitable vulcanizing fluid that has, in the meanwhile, been introduced into the tyre through one of the many ways that are well-known to technicians. Of course, once the vulcanizing has taken place, there will follow the inverse process of opening the mould for extracting the vulcanized tyre.

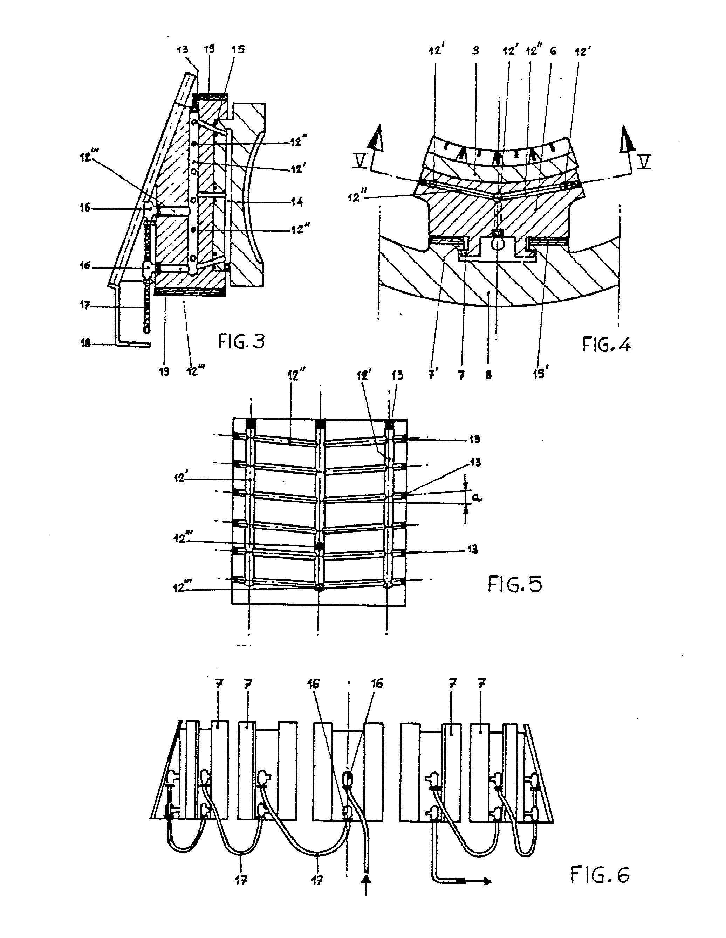

FIG. 4 illustrates the axial section of a sector and of a part of the containing-ring, according to the plane IV—IV of FIG. 2. In said FIG. 4 there can be observed: the matrix 9, the body of the sector 6 — provided with the already-mentioned channels, and the sliding-guides 7 and 7' — for the coupling between the corresponding radially inner surface of the containing-ring 8 and the radially outer surface of the sector 6.

The said network of channels is illustrated in detail within the entire assembly of FIGS. 1, 4 and 5. According to a preferred form of realization, said network consists of a plurality of axial channels 12' — i.e. directed according to the axis of the vulcanizing device, connected one to the other by a network of transversal channels 12'', each one of which connects at least two axial channels.

The channels 12'' are not directed perpendicularly in respect of the axis of the channels 12' — i.e. according to an angle of 90°, but they present a certain inclination, defined by the angle "a" (FIG. 5); said inclination is comprised conveniently between 1° and 5° with respect to the equatorial plane of the mould — i.e. between 85° and 89° in respect of the axis of the axial channels 12'.

Said inclination is given for consenting to collect the condensate in the lower portion of the axial channels and the discharge from the sector of the said condensate. All the channels described here, are blind channels — i.e. shut towards the outside ambient. In other words, they were made, axially for convenience sake, by piercing the sector from the outside and up to a certain depth; successively the entry-hole was shut — for example, through suitable stoppers 13, in such a way as to completely insulate said network of channels from the outside ambient. Next, said network is connected to the radially outer surface of the sector — by means of two radial channels 12''', disposed respectively above and below, that serve for introducing and/or discharging the fluid utilized for heating the sector itself.

Even these channels 12''' — although illustrated as directed radially, according to an angle of 90° with respect to the axial channel 12' — can, in reality, be conveniently inclined with respect to the axis of the said channel, according to an angle that is preferably equal, but which can also be diverse, with respect to the angle of inclination of the tranversal channels 12''.

In the preferred form of realization illustrated in FIG. 5, these two channels are connected with the central axial channel. The radial lower channel is connected with the axially lower extremity of the said axial channel, the upper radial channel flows into the axial channel at the highest altitude allowed by the requirements, for preventing any mechanical interference between ring 8 and sector 6, that reciprocally slide along the pairs of inclined guides.

FIG. 3, illustrates a further advantageous form of realization for the invention, according to which a channel system 14 — quite similar to the said network of channels 12, is made inside the matrix 9, solidly fixed to the sector 6. Naturally, in such an instance, the connection, between the two networks of channels, must be realized with fluid-tight systems — that prevent any blow-by of the heating-fluid through the coupling surfaces between the sector and the matrix. This requirement is easily satisfied through the usage of suitable packings 15 disposed in the joining zones of the channels, also substantially radial, where the two network are connected together.

All the sectors are connected to each other and/or with a system for the feeding and discharging of a suitable heating-fluid, with fluid-tight means, in such a way as to realize a closed circuit for the circulation of the fluid. Said circuit does not admit any losses towards the external ambient, not even during the actioning of the device — i.e. during the phases of opening and of closing the mould, with the consequent reciprocal shifting of the sectors.

The modes of connecting the sectors to each other can be various. In particular, there is described and illustrated here (FIG. 6), the advantageous connection-in-series way, according to which each radial upper channel is connected with a radial lower channel of the adjacent sector. Naturally, a radial upper channel will be reserved for the connection with the system for introducing the fluid, while the corresponding radial lower channel, of the adjacent sector, will be connected with the system for extracting and/or discharging the fluid. In other words, the circulation of the fluid, through the plurality of sectors, can be conveniently realized by means of feeding with pressurized fluid, and extracting the same fluid with apt suction systems.

All the connections existing between the sectors and with the fluid feeding system that realize the said closed circuit, are realized with intake-bushes 16, that engage with the radial channels 12''' and with flexible connecting-hoses 17, having appropriate characteristics of resistence to pressure and to heat and of fluid-tightness, which are safeguarded against the outside ambient by a protective-shield 18, fixed to the lower surface of the sectors.

Another type of connection could, on the other hand, be the so-called "paralleling" one, according to which all the radial inlet-channels are connected to a single fluid-feeding ring, and all the radial outlet-channels are connected to a single fluid-suction ring.

Moreover, each sector is thermically insulated by the circumscribing parts of the device, by means of sheets 19 of a suitable insulating material disposed in correspondence of the axial upper and lower surface and of sliding-guides which delimit the sector towards the containing-ring. Quite conveniently, these sheets of insulating material could constitute the sliding-surface itself of the sector, as can be noted in the example of solution illustrated in FIG. 3. In this instance, the material should for preference, also have antifrictional characteristics — for facilitating the sliding of the sector against the corresponding surfaces. For this purpose, the usage of a paste — based upon fibreglass and a silicone material, has proved to be quite convenient.

Evidently, when the insulating material constitutes the sliding-surface, it can be disposed both on the sector, as well as on the device part in contact with this sector. For example, the insulating material that separates the sector from the ring, can be disposed — not on the sector, but upon the containing-ring, as can be seen illustrated in FIG. 4, where the plates 19' of insulating material, which constitute the sliding-surface, are fixed upon the ring, between ring and sector, and the sector is maintained in contact with the said plates, by means of the L-shaped guides 7 fixed solidly to the body of the sector.

As already stated, for all the operations — for heating the device in its complex whole and for vulcanizing the tyres, a vapour is utilized, even though other fluids can also find convenient application — such as, for example: water, oil, or other types of fluid that are, for that matter, known to technicians.

It stands to reason that the geometry of the network of channels 12 ought to be expressly chosen in relation to the particular type of fluid used.

There are multiple advantages to be had through the device of our present invention. In the first place, the fact of taking the heating-fluid directly inside the sector, allows for a precise controlling of the temperature in the sector and above all of the matrix, with guaranteeing besides, a uniform temperature on the entire surface in contact with the tyre.

In order to appreciate this advantage and its importance, it has to be remembered that the tread zone is the tyre portion which presents the maximum thickness and the maximum structural complexity. From this hence, it results as being essential to control the temperature in order to have a uniform and measured distribution of heat.

Again, the uniformity of the heat in all the portions of the mould, results as being easily obtainable — which state was impossible to obtain when the matrix relative to the tread, diversely from the annular sections relative to the sidewalls, had to be heated through conduction, the deriving its heat from the containing-ring, which was the element that was directly re-heatable by means of the fluid.

Seen from this viewpoint, the further convenience, of also having the matrix provided with channels for the circulation of the heating fluid, is clear. Moreover, such a solution also involves considerable costs when it is compared with the solution which foresees the network of channels present exclusively in the sector.

In fact, whereas the sector is a constituting immutable element of the vulcanizing mould, the matrix is changed each time that the size of the tyre, or the pattern of the tread to be moulded on the tyre, has to be modified. Moreover, said matrix is subject to a wear-and-tear that is quite accentuated with respect to the wearing-out of the sector, so much so that several matrices have to be duly changed during the service lifetime of a sector. Hence, all these operation of providing so many matrices for having an adequate network of channels, results as being burdensome. And, when set against the advantages that are obtainable, these do not prove to be as important with respect to the advantages that are obtainable with the sector only being directly heated by fluid means.

A further advantage consists in better utilizing the heating-fluid and the heat — transmitted by this fluid to the mould parts. In the first place, it is clear that the closed circuit within which the fluid circulates, does not permit any losses of this fluid towards the outside ambient, which fact results hence, in a considerable saving of energy. Moreover, the closed circuit allows for feeding the heated fluid to the sectors, even during the actioning phase, and in particular, during the opening of the mould, so that there is obviated any lowering of the temperature — to which the sectors of the known vulcanizing devices in the state of the art, are subjected.

Still another advantage — resulting from the fact of having to carry the heating-fluid directly into the sector, consists in the possibility of thermically insulating the said sector towards the circumscribing parts of the device, in particular towards the lower and upper plates and towards the containing-ring. This was not evidently possible when the sector had to be heated by drawing its heat from these circumscribing parts and specifically from the ring that contained the said sectors; said ring moreover, owing to its very structure, was clearly a notable source of heat dispersion.

It can easily be comprehended that the thermic insulation of the sector, towards the adjacent parts, allows for considerably reducing this dispersion of heat towards the outside ambient — with resulting in having a further saving of energy and in also improving the possibility of controlling the temperature of the sector and of the matrix — with quite advantageous results, on a qualitative level, in the finished tyre.

Finally, it is clear that the present description serves an exclusively informative and non-limiting purpose, such that modifications and variations, even though not expressly described herein, may fall within the scope of the invention as claimed.

**Claims**

1. Device for moulding and vulcanizing elastomeric material articles — specifically vehicle-wheel tyres, comprising two continuous and co-axial annular sections (1, 2), axially and reciprocally shiftable, corresponding to the tyre sidewalls, and with a plurality of sectors (6), corresponding to the perimetrical zone outside of the tyre, interposed between said annular sections and concentrically disposed in respect of them, fixed to the radially inner surface of a containing-ring (8) coaxial with said annular sections and axially shiftable with respect to the same, said sectors being radially shiftable in both the senses with respect to the axis of said sections and axially shiftable with respect to at least one of them, each sector being provided on its radially inner surface with a matrix (9) suited for moulding on said outer perimetrical zone of the tyre, a corresponding portion of the tread design, and being provided on its radially outer surface with surfaces that are inclined with respect to the axis of said ring and coupled with a corresponding portion of the radially inner surface of said containing-ring, with reciprocal sliding possibilities for the realization of said radial shiftings of the sectors, the device being characterized by the fact that said sectors (6) are provided with cavities (12) which constitute a part of circuit that is permanently closed towards the outside ambient, suited for allowing the circulation of a fluid for directly heating said sectors.

2. Device, according to Claim 1, characterized by the fact that said cavities (12) constitute a network of channels that present points of entry from the outside of the sector, for the inlet and outlet of said fluid.

3. Device, according to Claim 2, characterized by the fact that said network of channels comprises a plurality of axial blind-channels (12'), having their axes parallel to that of the device, connected one to the other by a plurality of transversal blind-channels (12''), each transversal blind-channel connecting at least two axial channels, said network of channels being connected with the radially outer surface of the sector (6) by means of two substantially radial channels (12'''), respectively below and above, connected to at least one of said axial channels, the lower radial channel being disposed in correspondence of the axially lower extremity of said axial channels, each of said transversal and radial channels having its axis inclined, with respect to the axis of the corresponding axial channel, at an angle that is diverse to 90°.

4. Device, according to Claim 3, characterized by the fact that said angle of inclination of the transversal and radial channels, is preferably comprised between 85° and 89°.

5. Device, according to Claim 1, characterized by the fact that said circuit closed towards the outside ambient, is realized by connecting all the sectors in series, one to the next, according to a ring-shaped circuit, each upper radial channel being connected, by fluid-tight means (7), with the lower radial channel of the adjacent sector — with the exception of a radial upper channel connected by means of feeding and/or introducing said fluid and of the corresponding lower radial channel connected by means of suction and/or discharging said fluid.

6. Device, according to Claim 2, characterized by the fact that said network of channels is connected, by fluid-tight means, to a similar system of channels (14) made in said matrix.

7. Device, according to Claim 1, characterized by the fact that said sectors are insulated from the adjacent parts of the device, by means of zones (19) of thermically insulating material.

8. Device, according to Claim 7, characterized by the fact that said material constitutes the covering of at least one of the reciprocally sliding surfaces of said sectors and the remaining parts of the device.

9. Device, according to Claim 1, characterized by the fact that said heating-fluid is a vapour.

## Patentansprüche

1. Vorrichtung zum Formen und Vulkanisieren von Gegenständen aus elastomerem Material, speziell Reifen für Fahrzeugräder, umfassend zwei kontinuierliche und gleichachsige ringförmige Abschnitte (1, 2), die axial und hin- und herverschiebbar sind entsprechend den Reifenseitenwänden, und mit einer Mehrzahl von Segmenten (6), die der Umfangszone auf der Außenseite des Reifens entsprechen und zwischen den ringförmigen Abschnitten und mit Bezug auf diese konzentrisch angeordnet, an der radial inneren Fläche eines Halteringes (8) gleichachsig zu den ringförmigen Abschnitten befestigt und mit Bezug auf dieselben axial verschiebbar sind, wobei die Segmente mit Bezug auf die Achse der genannten Abschnitte in beiden Richtungen radial verschiebbar und mit Bezug auf wenigstens einen von diesen axial verschiebbar sind, jedes Segment an seiner radial inneren Fläche mit einer Matrix (9), die zum Formen eines entsprechenden Teiles der Laufflächengestaltung an der äußeren Umfangszone des Reifens geeignet und an ihrer radial äußeren Fläche mit Flächen versehen ist, die mit Bezug auf die Achse des Ringes schräg verläuft und mit einem entsprechenden Teil der radial inneren Fläche des Halteringes gekoppelt ist, wobei hin- und hergehende Verschiebungen für die Verwirklichung radialer Verschiebungen der Segmente möglich sind, dadurch gekennzeichnet, daß die Segmente (6) mit Hohlräumen (12) versehen sind, die einen Teil eines Stomkreises darstellen, der zur äußeren Umgebung dauernd geschlossen ist und der dazu geeignet ist, das Umlaufen eines Arbeitsmittels für direktes Heizen der Segmente zu ermöglichen.

2. Vorrichtung nach Anspruch 1, dadurch gekennzeichnet, daß die Hohlräume (12) ein Netzwerk von Kanälen darstellen, die Stellen des Eintritts von der Außenseite des Segmentes darbieten für das Einlassen und das Auslassen des Arbeitsmittels.

3. Vorrichtung nach Anspruch 2, dadurch gekennzeichnet, daß das Netzwerk von Kanälen eine Mehrzahl von axialen Blindkanälen (12') aufweist, deren Achsen parallel zur Achse der Vorrichtung verläuft und die durch eine Mehrzahl von querverlaufenden Blindkanälen (12'') miteinander verbunden sind, jeder querverlaufende Blindkanal wenigstens zwei axiale Kanäle verbindet, das Netzwerk von Kanälen mit der radial äußeren Fläche des Segmentes (6) mittels zweier im wesentlichen radialer Kanäle (12'''), unten bzw. oben, verbunden ist, die mit wenigstens einem der axialen Kanäle verbunden sind, der untere radiale Kanal im Bereich des axial unteren Endes der axialen Kanäle angeordnet ist, und die Achse jedes der querverlaufenden und radialen Kanäle mit Bezug auf die Achse des entsprechenden axialen Kanales in einem Winkel schräg verläuft, der von 90° verschieden ist.

4. Vorrichtung nach Anspruch 3, dadurch gekennzeichnet, daß der Schrägwinkel der querverlaufenden und der radialen Kanäle vorzugsweise zwischen 85° und 89° liegt.

5. Vorrichtung nach Anspruch 1, dadurch gekennzeichnet, daß der in Richtung zur äußeren Umgebung geschlossene Stromkreis verwirklicht ist durch Anschließen aller Segmente in Reihe, eines mit dem nächsten, in Übereinstimmung mit einem ringförmigen Stomkreis, jeder obere radiale Kanal mittels einer fluiddichten Einrichtung (7) mit dem unteren radialen Kanal des benachbarten Segmentes verbunden ist, mit der Ausnahme eines radialen oberen Kanales, der mittels des Zuführens und/oder des Einführens des Arbeitsmittels angeschlossen ist, und des entsprechenden unteren radialen Kanales, der mittels Ansaugen und/oder Abgeben des Fluids angeschlossen ist.

6. Vorrichtung nach Anspruch 2, dadurch gekennzeichnet, daß das Netzwerk von Kanälen über fluiddichte Mittel mit einem ähnlichen System von Kanälen (14) verbunden ist, welches in der Matrix gebildet ist.

7. Vorrichtung nach Anspruch 1, dadurch gekennzeichnet, daß die genannten Segmente von den benachbarten Teilen der Vorrichtung isoliert sind mittels Zonen (19) aus wärmeisolierendem Material.

8. Vorrichtung nach Anspruch 7, dadurch gekennzeichnet, daß das Material die Bedeckung wenigstens einer der hin- und hergleitenden Flächen der Segmente und der verbleibenden Teile der Vorrichtung ist.

9. Vorrichtung nach Anspruch 1, dadurch gekennzeichnet, daß das Heizfluid ein Dampf ist.

## Revendications

1. Dispositif de moulage et de vulcanisation d'articles en matière élastomère — spécifiquement des pneumatiques pour roues de véhicules, comprenant deux parties annulaires continues et coaxiales (1, 2), pouvant être déplacées axialement et alternativement, en correspondance aux flancs du pneumatique, ainsi qu'une pluralité de secteurs (6), correspondant à la zone périphérique extérieure du pneumatique, interposés entre lesdites parties annulaires et disposés concentriquement par rapport à elles, en étant fixés sur la surface radialement intérieure d'un anneau de retenue (8) disposé coaxialement auxdites parties annulaires et déplaçable axialement par rapport à celles-ci, lesdits secteurs étant radialement déplaçables dans les deux sens par rapport à l'axe desdites parties et étant axialement déplaçables par rapport à au moins une d'elles, chaque secteur étant pourvu sur sa surface radialement intérieure d'une matrice (9) appropriée pour un moulage, sur ladite zone périphérique extérieure du pneumatique, d'une partie correspondante du modèle de bande de roulement, et étant pourvu sur sa surface radialement intérieure de surfaces qui sont inclinées par rapport à l'axe dudit anneau et qui sont accouplées avec une partie correspondante de la surface radialement intérieure dudit anneau de retenue, avec possibilités de glissements réciproques pour l'exécution desdits mouvements radiaux des secteurs, le dispositif étant caractérisé par le fait que lesdits secteurs (6) sont pourvus de cavités (12) qui constituent une partie d'un circuit qui est fermé de façon permanente en direction de l'atmosphère ambiante extérieure et qui convient pour permettre la circulation d'un fluide servant à chauffer directement lesdites secteurs.

2. Dispositif selon la revendication 1, caractérisé par le fait que lesdites cavités (12) constituent un réseau de canaux qui comporte des points d'entrée à partir du côté extérieur du secteur pour assurer l'entrée et la sortie dudit fluide.

3. Dispositif selon la revendication 2, caractérisé par le fait que ledit réseau de canaux comprend une pluralité de canaux borgnes axiaux (12'), dont les axes sont parallèles à celui du dispositif et qui sont reliés entre eux par une pluralité de canaux borgnes transversaux (12''), chaque canal borne transversal reliant au moins deux canaux axiaux, ledit réseau de canaux étant relié à la surface radialement extérieure du secteur (6) au moyen de deux canaux sensiblement radiaux (12'''), situés respectivement en dessous et au-dessus et reliés à au moins un desdits canaux axiaux; le canal radial inférieur étant disposé en correspondance à l'extrémité axialement inférieure desdits canaux axiaux, chacun desdits canaux transversaux et radiaux ayant son axe incliné, par rapport à l'axe du canal axial correspondant, d'un angle différent de 90°.

4. Dispositif selon la revendication 3, caractérisé par le fait que ledit angle d'inclinaison des canaux transversaux et radiaux est de préférence compris entre 85° et 89°.

5. Dispositif selon la revendication 1, caractérisé par le fait que ledit circuit fermé en direction de l'atmosphère ambiante extérieure est réalisé par liaison en série de tous les secteurs, l'un avec le suivant, en correspondance à un circuit de forme annulaire, chaque canal radial supérieur étant relié, par un moyen étanche au fluide (7), avec le canal radial inférieur du secteur adjacent — l'exception d'un canal supérieur radial relié au moyen d'une alimentation et/ou une introduction dudit fluide et du canal radial inférieur correspondant relié au moyen d'une aspiration et/ou d'une décharge dudit fluide.

6. Dispositif selon la revendication 2, caractérisé par le fait que ledit réseau de canaux est relié, par des moyens étanches au fluide, à un ensemble semblable de canaux (14) formés dans ladite matrice.

7. Dispositif selon la revendication 1, caractérisé par le fait que lesdits secteurs sont isolés des parties adjacentes du dispositif au moyen de zones (19) formées d'un matériau thermiquement isolant.

8. Dispositif selon la revendication 7, caractérisé par le fait que ledit matériau constitue le recouvrement d'au moins une des surfaces, coulissant alternativement, desdits secteurs et des parties restantes du dispositif.

9. Dispositif selon la revendication 1, caractérisé par le fait que ledit fluide chauffant est une vapeur.

**FIG. 1**

**FIG. 2**

FIG. 3

FIG. 4

FIG. 5

FIG. 6